# EUROPEAN PATENT APPLICATION

(11) **EP 4 718 685 A1**
(43) Date of publication of application: **01.04.2026**
(21) Application number: 25203545.6
(22) Date of filing: 22.09.2025
(51) Int. Cl.: H02K 1/276

(54) **ROTOR FOR ROTARY ELECTRIC MACHINE**

(30) Priority: 27.09.2024 JP 2024168922; 09.07.2025 JP 2025115881
(71) Applicant: AISIN CORPORATION, Aichi 448-8650 (JP)
(72) Inventor: FURUTA, Yasunari, Kariya, Aichi, 448-8650 (JP); MORI, Takuma, Kariya, Aichi, 448-8650 (JP); ANDO, Shunta, Kariya, Aichi, 448-8650 (JP)
(74) Representative: Kramer Barske Schmidtchen Patentanwälte PartG mbB

(57) **Abstract**

A rotor (30) for a rotary electric machine includes: a rotor core (32) having an annular shape when viewed in an axial direction; a rotor shaft (34) disposed on a radially inner side of the rotor core and coupled to the rotor core by an interference in a radial direction; and a magnet (61) disposed in the rotor core for each magnetic pole in a form in which a plurality of magnetic poles are formed along a circumferential direction. The rotor core has a plurality of holes in the axial direction that are radially inward than the magnet. The plurality of holes in the axial direction include a plurality of first holes (71) regularly arranged in the circumferential direction at first radial positions and a plurality of second holes (72) regularly arranged in the circumferential direction at second radial positions that are radially inward than the first radial positions. The first hole has a protruding shape of which an outline (L710) on the radially inner side protrudes to the radially inner side when viewed in the axial direction, and has a shape of which a center line (d-axis), parallel to the radial direction and passing through a center in the circumferential direction of the first hole, passes between a portion in the circumferential direction of the adjacent second holes. The outline on the radially inner side includes two straight lines (L710), and a curve (C712) that passes through a radially outer side of an intersection point where extension lines of the two straight lines intersect and that connects the two straight lines.

## Description

### TECHNICAL FIELD

This disclosure relates to a rotor for a rotary electric machine.

### BACKGROUND DISCUSSION

In a rotor core of a rotor for a rotary electric machine, a technique of forming magnet holes for inserting a plurality of permanent magnets and forming a hole (slit) in an axial direction radially inward than the magnet holes is known.

Examples of the related art include JP 2020-58151A (Reference 1).

In the related art as described above, a slit has a substantially rectangular shape (an arc shape of which an outline on a radially inner side and an outline on a radially outer side are concentric). With such a shape, it is difficult to appropriately reduce stress concentration around the hole (slit) in the axial direction due to an increase in an inner diameter (deformation) of the rotor core, which is caused by assembly with a rotor shaft. In particular, a centrifugal force tends to increase with an increase in rotation speed of the rotary electric machine in recent years, and the above-described problem becomes serious due to the increase in the centrifugal force.

A need thus exists for a rotor for a rotary electric machine in which stress concentration around a hole in an axial direction caused by an increase in an inner diameter of a rotor core is appropriately reduced.

### SUMMARY

According to an aspect of this disclosure, there is provided a rotor for a rotary electric machine, the rotor for the rotary electric machine including:
a rotor core having an annular shape when viewed in an axial direction;
a rotor shaft disposed on a radially inner side of the rotor core and coupled to the rotor core by an interference in a radial direction; and
a magnet disposed in the rotor core for each magnetic pole in a form in which a plurality of magnetic poles are formed along a circumferential direction, in which
the rotor core has a plurality of holes in the axial direction that are radially inward than the magnet,
the plurality of holes in the axial direction include a plurality of first holes regularly arranged in the circumferential direction at first radial positions and a plurality of second holes regularly arranged in the circumferential direction at second radial positions that are radially inward than the first radial positions,
the first hole has a protruding shape of which an outline on the radially inner side protrudes to the radially inner side when viewed in the axial direction, and a center line, parallel to the radial direction and passing through a center in the circumferential direction of the first hole, passes between a portion in the circumferential direction of the adjacent second holes, and
the outline on the radially inner side includes two straight lines, and a curve that passes through a radially outer side of an intersection point where extension lines of the two straight lines intersect and that connects the two straight lines.

In this aspect, according to this disclosure, it is possible to appropriately reduce stress concentration around the holes in the axial direction caused by an increase in an inner diameter of the rotor core.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view schematically illustrating a cross-sectional structure of a motor according to an embodiment;
Fig. 2 is a cross-sectional view illustrating a rotor core of a rotor;
Fig. 3 is an enlarged view illustrating a portion related to one magnetic pole of the rotor;
Fig. 4A is an enlarged view illustrating a portion related to one magnetic pole of a rotor core according to a first comparative example for comparison with Fig. 3;
Fig. 4B is an enlarged view illustrating a portion related to one magnetic pole of a rotor core according to a second comparative example for comparison with Fig. 3;
Fig. 4C is an enlarged view illustrating a portion related to one magnetic pole of a rotor core according to a third comparative example for comparison with Fig. 3;
Fig. 5 is a table illustrating an analysis result;
Fig. 6 is a graph illustrating another analysis result;
Fig. 7 is an enlarged view illustrating a radially inner portion of a portion related to one magnetic pole of a rotor core according to Embodiment 2;
Fig. 8 is an enlarged view illustrating a portion Q7 in Fig. 7;
Fig. 9 is a view illustrating another effect of Embodiment 2, and is a table illustrating an analysis result; and
Fig. 10 is an enlarged view illustrating a radially inner portion of a portion related to one magnetic pole of a rotor core according to Embodiment 3.

### DETAILED DESCRIPTION

Hereinafter, embodiments will be described in detail with reference to the accompanying drawings. Dimensional ratios in the drawings are merely examples and are not limited thereto. Further, shapes and the like in the drawings may be partially exaggerated for the convenience of description. In the drawings, for the sake of clarity, a plurality of parts having the same attribute may be only partially denoted by reference signs.

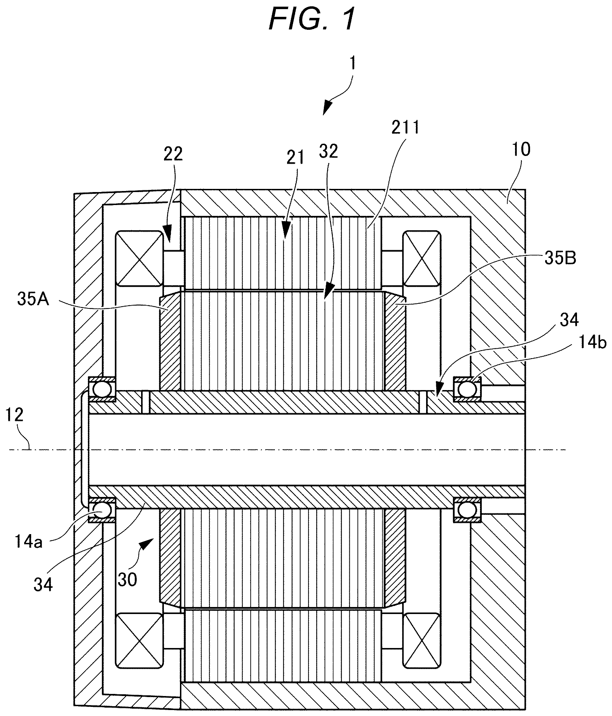

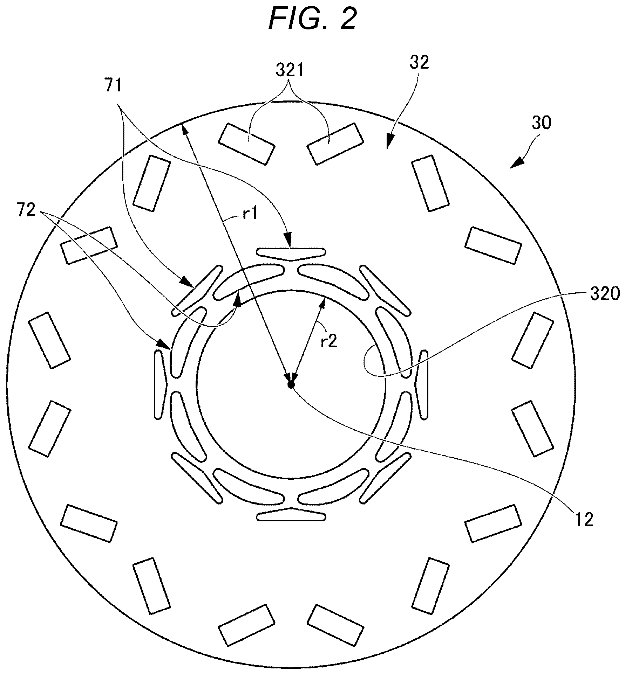

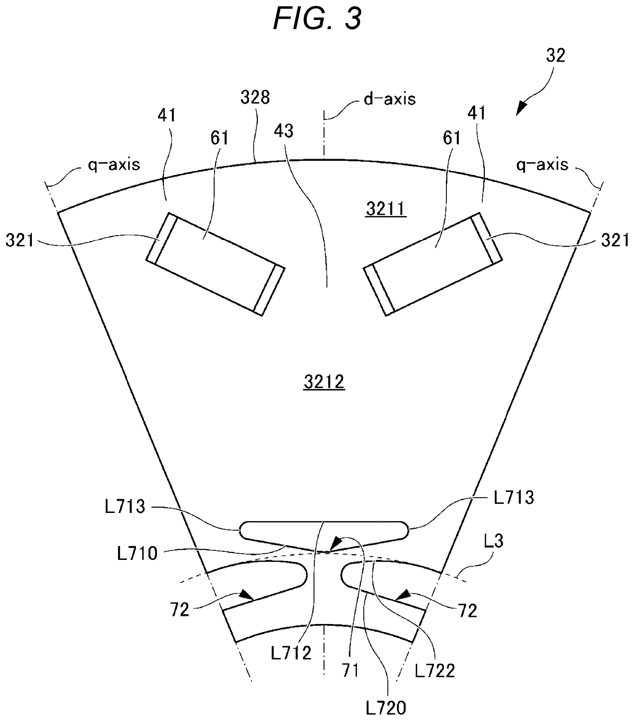

Fig. 1 is a cross-sectional view schematically illustrating a cross-sectional structure of a motor 1 according to an embodiment. Fig. 2 is a cross-sectional view (a cross-sectional view taken along a plane perpendicular to an axial direction) of a rotor core 32 of a rotor 30. Fig. 3 is an enlarged view illustrating a portion related to one magnetic pole of the rotor 30.

Fig. 1 illustrates a rotation axis 12 of the motor 1. In the following description, an axial direction refers to a direction in which the rotation axis (rotation center) 12 of the motor 1 extends, and a radial direction refers to a radial direction about the rotation axis 12. Therefore, a radially outer side refers to a side away from the rotation axis 12, and a radially inner side refers to a side toward the rotation axis 12. A circumferential direction corresponds to a rotation direction around the rotation axis 12.

The motor 1 may be, for example, a vehicle driving motor used in a hybrid vehicle or an electric vehicle. Alternatively, the motor 1 may be used for any other application.

The motor 1 is of, for example, an inner rotor type, and a stator 21 is provided to surround the radially outer side of the rotor 30. The stator 21 is fixed to a motor housing 10. The stator 21 includes a stator core 211 made of, for example, annular magnetic stacked steel plates, and a plurality of slots (not illustrated) around which coils 22 are wound are formed on the radially inner side of the stator core 211.

The rotor 30 is disposed on radially inward than the stator 21.

The rotor 30 includes the rotor core 32, a rotor shaft 34, end plates 35A and 35B, and magnet pieces 61. The end plates 35A and 35B may be omitted.

The rotor core 32 is fixed to a radially outer side surface of the rotor shaft 34 and rotates integrally with the rotor shaft 34. The rotor core 32 has a shaft hole 320 (see Fig. 2), and the rotor shaft 34 is fitted into the shaft hole 320. The rotor core 32 is coupled to the rotor shaft 34 with a interference in the radial direction. That is, the rotor core 32 and the rotor shaft 34 are coupled to each other by fixing with the interference. For example, the rotor core 32 and the rotor shaft 34 may be coupled to each other with the interference in the radial direction by shrink fitting, press fitting, or hydroforming. Alternatively, a coupling force between the rotor core 32 and the rotor shaft 34 may be not only the interference in the radial direction but also an axial force by a nut or the like.

The rotor shaft 34 is rotatably supported by the motor housing 10 via bearings 14a and 14b. The rotor shaft 34 defines the rotation axis 12 of the motor 1.

The rotor core 32 is formed of, for example, annular magnetic stacked steel plates. The magnet pieces 61 (see Fig. 3) are embedded inside the rotor core 32. That is, the rotor core 32 has magnet holes 321 (see Fig. 2) penetrating the rotor core 32 in the axial direction, and the magnet pieces 61 are inserted and fixed in the magnet holes 321. In a modification, the rotor core 32 may be formed of a green compact obtained by compressing and solidifying magnetic powder.

The rotor core 32 has an annular shape with an outer diameter r1 and an inner diameter r2 (a diameter of the shaft hole 320). In a modification, the annular shape of the rotor core 32 does not need to be a perfect circle, and may be, for example, a circular shape having a notch on a part or an elliptical shape close to a circle.

As illustrated in Fig. 2, the rotor core 32 has a rotationally symmetrical shape about the rotation axis 12 when viewed in the axial direction. In the example illustrated in Fig. 2, the rotor core 32 has a shape of which the magnet pieces 61 of each set overlap each other every time the rotor core 32 is rotated by 45 degrees about the rotation axis 12.

The plurality of magnet pieces 61 are in the form of sintered magnets and may be formed of neodymium or the like. Alternatively, a magnet formed of a bonded magnet material may be used instead of the magnet piece 61 in a modification. In the present embodiment, for example, the plurality of magnet pieces 61 are arranged to be rotationally symmetric for each magnetic pole when viewed in the axial direction, as illustrated in Fig. 3. The plurality of magnet pieces 61 are arranged such that S poles and N poles alternately appear in the circumferential direction. In the present embodiment, the number of magnetic poles is eight, but the number of magnetic poles is freely set. In the present embodiment, the magnet pieces 61 have the same linear shape when viewed in the axial direction. Alternatively, the magnet pieces 61 may have different shapes. Further, at least one of the magnet pieces 61 may have an arc shape when viewed in the axial direction.

Fig. 1 illustrates the motor 1 having a specific structure, but the structure of the motor 1 is not limited to such a specific structure. For example, the rotor shaft 34 is hollow in Fig. 1, but may be solid.

Next, the rotor core 32 and the magnet pieces 61 will be described in more details with reference to Fig. 3 and subsequent drawings. Hereinafter, a configuration related to one magnetic pole will be described, and the same applies to a configuration related to other magnetic poles.

As illustrated in Fig. 3, the configuration related to one magnetic pole is basically symmetrical with respect to a d-axis (indicated by "d-axis" in Fig. 3) corresponding to a main magnetic flux direction (direction of a field pole). A direction of the d-axis corresponds to a direction of a magnetic field generated by the magnet pieces 61 disposed in the rotor 30. Hereinafter, a circumferential outer side refers to a side away from the d-axis, and a circumferential inner side refers to a side approaching the d-axis. The d-axis is formed at a center position in the circumferential direction of a circumferential range of each magnetic pole, while a q-axis (indicated by "q-axis" in Fig. 3) is formed at a boundary of the circumferential range of each magnetic pole (circumferential position between the magnet pieces 61 of each magnetic pole).

The magnet holes 321 are formed in the rotor core 32. The magnet holes 321 are formed to be rotationally symmetric for each magnetic pole.

Two of the magnet holes 321 are formed in a substantially V shape (a substantially V shape of which the radially outer side is open) as a pair. Alternatively, two of the magnet holes 321 may be formed in a linear shape as a pair, or may be implemented as one linear hole (linear hole perpendicular to the d-axis) in a modification. The magnet pieces 61 are provided in the respective magnet holes 321. A gap may be provided between the magnet hole 321 and the magnet piece 61 at both ends of the magnet piece 61 in a longitudinal direction. The gap may be a cavity or may be filled with a resin or the like.

Since the rotor core 32 has the magnet holes 321, the rotor core 32 has two portions 3211 and 3212 (hereinafter, also referred to as a first portion 3211 and a second portion 3212) coupled via a bridge (bridges 41 and 43 to be described later) in the radial direction.

Specifically, the first portion 3211 extends radially outward than the magnet hole 321. The first portion 3211 forms a part of an outer circumferential surface 328 of the rotor core 32. The first portion 3211 forms a magnetic path of a q-axis magnetic flux. Specifically, the q-axis magnetic flux related to the first portion 3211 flows from one end in the circumferential direction of the first portion 3211 toward the other end in the circumferential direction through the first portion 3211 (a region radially outward than the magnet hole 321).

Both sides in the circumferential direction of the second portion 3212 extend to the outer circumferential surface 328 of the rotor core 32 through the radially inner side of the magnet hole 321. The second portion 3212 forms a part of the outer circumferential surface 328 of the rotor core 32 on both sides in the circumferential direction of the first portion 3211. The second portion 3212 forms a magnetic path of the q-axis magnetic flux. Specifically, the q-axis magnetic flux related to the second portion 3212 flows from one end of the second portion 3212 to the other end through the radially inner side of the magnet hole 321. The second portion 3212 forms an inter-magnetic pole region on the both sides in the circumferential direction.

Since the rotor core 32 includes the two portions 3211 and 3212, the rotor core 32 includes a plurality of bridges 41 and 43 that couple the two portions 3211 and 3212.

The bridge 41 supports the first portion 3211 on the radially outer side with respect to the second portion 3212. That is, the bridge 41 couples the second portion 3212 and the first portion 3211 and extends in the circumferential direction. The bridges 41 are provided in pairs on the both sides in the circumferential direction of the first portion 3211 (outer sides in the circumferential direction).

The bridge 43 (hereinafter referred to as "center bridge 43") supports the first portion 3211 on the d-axis with respect to the second portion 3212.

In the example illustrated in Fig. 3, the magnet piece 61 inserted into the magnet hole 321 forms a permanent magnet of a first layer from the radially outer side. Alternatively, another magnet hole (that is, magnet hole of second layer) may be provided on a position radially inward than the magnet hole 321 in a modification. In this case, each magnet piece inserted into the magnet hole of the second layer forms a permanent magnet of the second layer from the radially outer side. As described above, the number of layers of the magnet may be not only one but also two or more. In the present embodiment, one magnet piece (the magnet piece 61) is inserted into one magnet hole 321. Alternatively, two or more magnet pieces may be inserted into one magnet hole in a modification.

In the example illustrated in Fig. 3, the magnet hole 321 does not extend on the d-axis and the center bridge 43 is located on the d-axis. Alternatively, the magnet hole 321 may extend on the d-axis in a modification. When the magnet hole of the second layer is provided as described above, one or both of the magnet hole 321 of the first layer and the magnet hole of the second layer may extend on the d-axis.

Next, a characteristic configuration of the present embodiment will be described with reference to Fig. 3.

In the present embodiment, as illustrated in Fig. 3, the rotor core 32 has a first slit 71 and a second slit 72 on positions radially inward than the magnet hole 321 (and the magnet piece 61 inside the magnet hole 321). That is, the first slit 71 and the second slit 72 are formed in the second portion 3212 of the rotor core 32. The first slit 71 and the second slit 72 are each have a shape of a hole in the axial direction that penetrates the rotor core 32 in the axial direction.

The first slit 71 is disposed at a position radially inward than the magnet hole 321 and radially outward than the second slit 72 (hereinafter, also referred to as a "first radial position"). The second slit 72 is disposed at a position radially inward than the first slit 71 and radially outward than the shaft hole 320 (hereinafter, also referred to as a "second radial position").

A plurality of the first slits 71 are provided. The plurality of first slits 71 are provided at the first radial positions in a rotationally symmetrical manner for each magnetic pole. The plurality of first slits 71 form a hole row arranged regularly in the circumferential direction. In the present embodiment, the first slit 71 for each magnetic pole includes one slit whose center in the circumferential direction is located on the d-axis. The first slit 71 has a shape symmetrical with respect to a line (that is, the d-axis in this example) passing through the center in the circumferential direction and parallel to the radial direction when viewed in the axial direction.

Alternatively, the first slit 71 for each magnetic pole may include one slit whose center in the circumferential direction is located on the d-axis and a half of each of two slits whose center in the circumferential direction is located on the q-axis (half divided by the q-axis) in a modification. In the present specification, the d-axis may be a d-axis in any one of division cores (core blocks) when a skew structure using the division cores is adopted. The first slit 71 may have a shape of which the center in the circumferential direction is not located on the d-axis. Alternatively, the first slit 71 for each magnetic pole may include a half of each of two slits whose center in the circumferential direction is located on the q-axis (half divided by the q-axis). When the center in the circumferential direction is located on the q-axis, the first slit 71 has a shape symmetrical with respect to the q-axis (straight line passing through the center in the circumferential direction of an inter-magnetic pole region and parallel to the radial direction).

The first slit 71 has a shape of which an outline L710 on the radially inner side protrudes to the radially inner side when viewed in the axial direction. In this case, the outlines L710 on both sides of the d-axis are continuous via a curve C712 on the d-axis. The curve C712 has a shape recessed to the radially inner side, and may, for example, have a shape with a corner R (a part of an arc having a single radius) at a position where the outlines L710 on the both sides of the d-axis intersect on the d-axis. That is, the outline L710 on the radially inner side includes the outlines L710 which are two straight lines, and the curve C712 that passes through the radially outer side of an intersection point where extension lines of the two straight lines intersect and that connects the two straight lines. The first slit 71 has a linear shape of which an outline L712 on the radially outer side is orthogonal to the radial direction when viewed in the axial direction.

A plurality of second slits 72 are provided. The plurality of second slits 72 are provided at the second radial positions in a rotationally symmetrical manner for each magnetic pole. The plurality of second slits 72 form a hole row arranged regularly in the circumferential direction in a manner in which a center in the circumferential direction of the second slit 72 is different from that of the first slit 71. The plurality of second slits 72 and the plurality of first slits 71 are formed to have a common circumferential position. In the present embodiment, the second slit 72 for each magnetic pole includes a half of each of two slits whose center in the circumferential direction is located on the q-axis (half divided by the q-axis). In this case, the second slit 72 is not located on the d-axis. Therefore, for each magnetic pole, the first slit 71 has a form in which a line (center line) parallel to the radial direction passing through the center in the circumferential direction of the first slit 71 is located between the second slits adjacent to each other in the circumferential direction (non-slit region) when viewed in the axial direction in the present embodiment, More specifically, when viewed in the axial direction, the first slit 71 has a form in which the line parallel to the radial direction passing through the center in the circumferential direction of the first slit 71 is located between outlines of the second slits close to each other among outlines on both sides in the circumferential direction of the second slits adjacent to each other. In the present embodiment, that is, the center positions in the circumferential direction of the first slit 71 and the second slit 72 are offset in the circumferential direction by 1/2 which is an angular range of one magnetic pole. Alternatively, the first slit 71 and the second slit 72 may have other forms.

The second slit 72 may have any shape when viewed in the axial direction. In the present embodiment, for example, the second slit 72 has a linear shape of which an outline L720 on the radially inner side is orthogonal to the radial direction. Further, the second slit 72 has a shape in which an outline L722 on the radially outer side protrudes to the radially outer side when viewed in the axial direction.

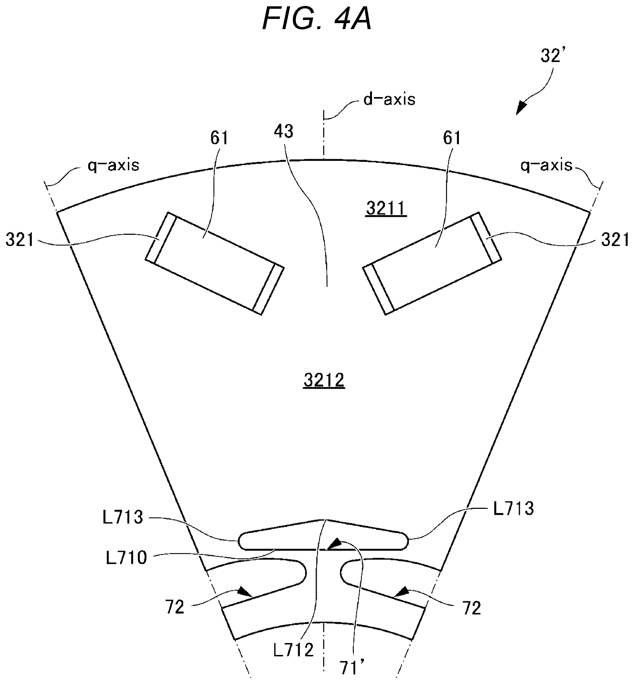

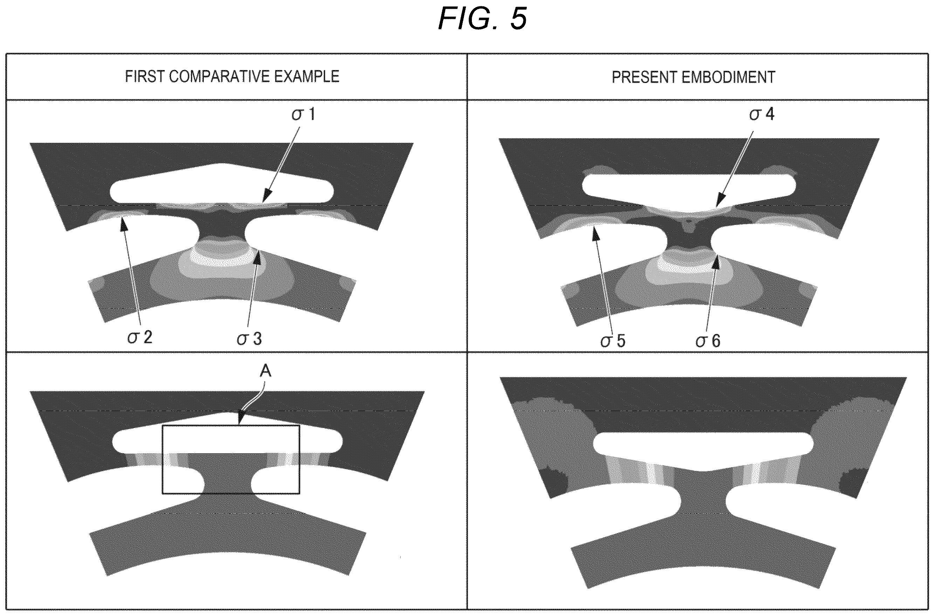

Here, an effect of the present embodiment will be described with reference to an analysis result illustrated in Fig. 5 and the like together with comparative examples illustrated in Figs. 4A to 4C.

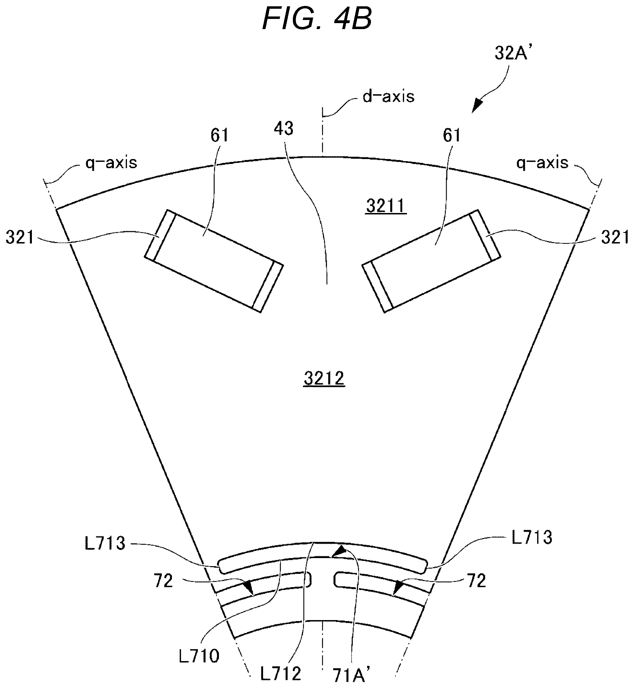

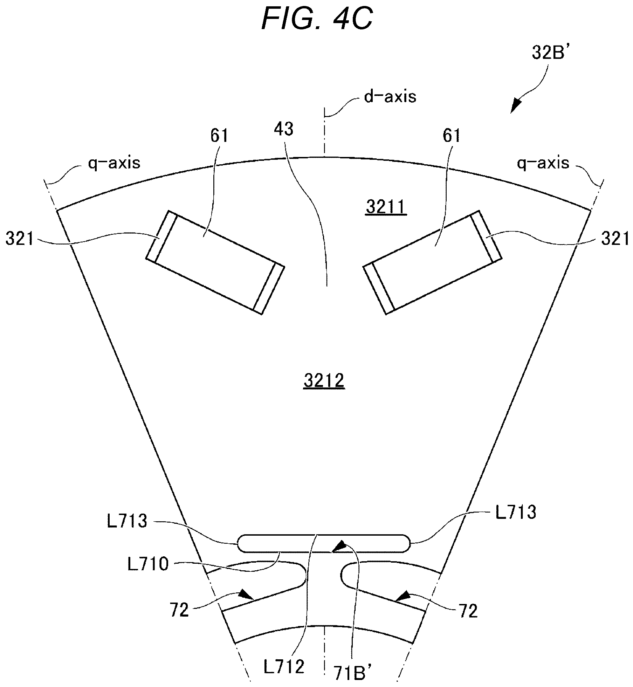

Fig. 4A is an enlarged view illustrating a portion related to one magnetic pole of a rotor core 32' according to a first comparative example for comparison with Fig. 3. Fig. 4B is an enlarged view illustrating a portion related to one magnetic pole of a rotor core 32A' according to a second comparative example for comparison with Fig. 3. Fig. 4C is an enlarged view illustrating a portion related to one magnetic pole of a rotor core 32B' according to a third comparative example for comparison with Fig. 3.

The rotor core 32' according to the first comparative example is different from the rotor core 32 according to the present embodiment in that the first slit 71 is replaced with a first slit 71'. The first slit 71' is different from the first slit 71 according to the present embodiment in a shape viewed in the axial direction. That is, the first slit 71' has a linear shape in which the outline L710 on the radially inner side is orthogonal to the radial direction when viewed in the axial direction. Further, the first slit 71' has a shape of which the outline L712 on the radially outer side protrudes to the radially outer side when viewed in the axial direction.

The rotor core 32A' according to the second comparative example is different from the rotor core 32 according to the present embodiment in that the first slit 71 is replaced with a first slit 71A'. The first slit 71A' is different from the first slit 71 according to the present embodiment in a shape viewed in the axial direction. That is, the first slit 71A' has a shape of which the outline L710 on the radially inner side has an arc shape concentric with the rotor core 32A' when viewed in the axial direction. Further, the first slit 71' has a shape of which the outline L712 on the radially outer side has an arc shape concentric with the rotor core 32A' when viewed in the axial direction.

The rotor core 32B' according to the third comparative example is different from the rotor core 32 according to the present embodiment in that the first slit 71 is replaced with a first slit 71B'. The first slit 71B' is different from the first slit 71 according to the present embodiment in a shape viewed in the axial direction. That is, the first slit 71B' has a linear shape of which the outline L710 on the radially inner side is orthogonal to the radial direction when viewed in the axial direction. The first slit 71B' has a linear shape of which the outline L712 on the radially outer side is orthogonal to the radial direction when viewed in the axial direction.

Fig. 5 is a table illustrating the analysis result. Fig. 5 relates to a comparison between the first comparative example and the present embodiment. The analysis result is illustrated in a contour view. The analysis was performed using a finite element model under a condition that an inner diameter was forcibly displaced (enlarged). Fig. 5 illustrates two types of analysis results, an upper side illustrates a stress distribution in a contour view, and a lower side illustrates a displacement distribution in a contour view. In the specification, the contour view is in gray scale because color display cannot be performed, and the description will be given on the premise that a distribution range of the same gradation is a region of the same numerical value range.

Although not easily read from the contour view of the stress distribution on the upper side of Fig. 5, stresses σ1 to σ6 have the following relationship. Based on σ3 > σ2 > σ1, σ6 > σ4 > σ5, σ6 < σ3, σ5 < σ2, and σ4 > σ1, it can be understood that the stress can be reduced in the present embodiment in a region where a relatively high stress (σ3, σ2, and σ6) is generated as compared with the first comparative example. In particular, it was found that σ5 was reduced to a stress value slightly lower than σ4, σ5/σ2 ≈ 0.87, and a significantly large reduction effect of 13% was obtained.

As can be seen from the contour view of the stress distribution on the lower side of Fig. 5, a region between the first slit 71' and the second slit 72 in the radial direction has the following tendency in the first comparative example. That is, in the first comparative example, when a portion between a pair of the second slits 72 in the radial direction is defined as a central portion (refer to a portion A), a large displacement tends to concentratedly occur in the vicinity of the central portion. Accordingly, the displacement is relatively small in the vicinity of both ends in the circumferential direction of the first slit 71'. On the other hand, a region between the first slit 71 and the second slit 72 in the radial direction has the following tendency in the present embodiment. That is, in the present embodiment, the displacement is relatively large in the vicinity of both ends in the circumferential direction of the first slit 71, and the displacement is dispersed from the vicinity of the central portion between the pair of the second slits 72 in the radial direction toward both sides in the circumferential direction. This may be because the rigidity of the central portion in the present embodiment is significantly higher than that in the first comparative example. As described above, the displacement distribution that tends to be large in the central portion can be expanded to both ends in the circumferential direction of the first slit 71 in the present embodiment, as compared with the first comparative example, and as a result, the above-described stress reduction effect can be obtained.

Although an analysis result related to the second comparative example (Fig. 4B) is not illustrated in the contour view here, a stress at a position of σ2 in the first comparative example is slightly reduced relative to the first comparative example, but stresses at other positions are significantly increased as compared with the first comparative example. In the analysis result of the second comparative example, it was found that the stress at the position of the stress σ2 in the first comparative example was significantly larger than the stress σ5 at the same position in the present embodiment.

Similarly, although an analysis result related to the third comparative example (Fig. 4C) is not illustrated in the contour view here, a stress at a position of the stress σ5 in the present embodiment was significantly larger than the stress σ5 in the present embodiment. Specifically, it was found that a significantly large reduction effect of 13% was obtained in the present embodiment as compared with the third comparative example.

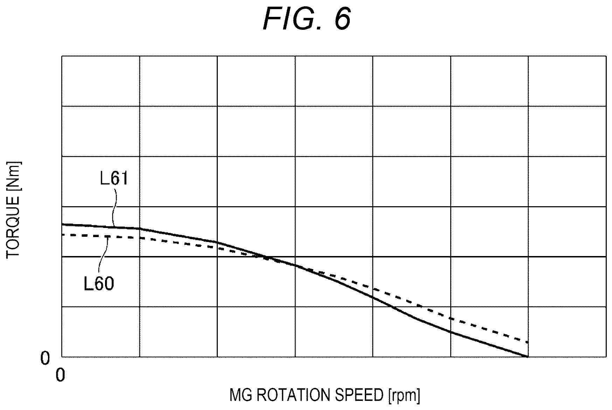

Fig. 6 is a graph illustrating another analysis result. In Fig. 6, a horizontal axis represents a rotation speed of the motor 1 (denoted as "MG rotation speed"), and a vertical axis represents a torque, and an analysis result of a feature of a holding torque corresponding to the rotation speed of the motor 1 is illustrated. The holding torque corresponds to a torque that can be transmitted between the rotor shaft 34 and the rotor core 32.

In Fig. 6, a feature L60 indicates a feature when a radial position of a protruding distal end of the first slit 71 is slightly on the radially inner side of a reference circle L3 (see Fig. 3). A feature L61 indicates a feature when the radial position of the protruding distal end of the first slit 71 is slightly on the radially outer side of the reference circle L3 (see Fig. 3).

As can be seen from Fig. 6, as the rotation speed of the motor 1 increases, the holding torque decreases due to an increase in a centrifugal force. In this case, the holding torque for the feature L60 is larger than the holding torque for the feature L61 in a high-speed rotation range. Accordingly, it is advantageous in that the holding torque can be efficiently increased when the radial position of the protruding distal end of the first slit 71 is slightly on the radially inner side of the reference circle L3 (see Fig. 3). Here, in order to further increase the holding torque in the high-speed rotation range, the radial position of the protruding distal end of the first slit 71 may be located further inward in the radial direction than the reference circle L3.

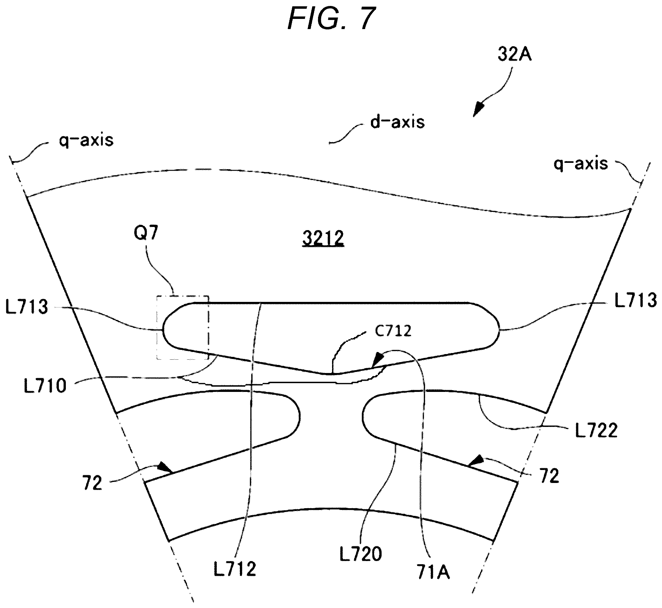

Next, another preferable embodiment will be described with reference to Fig. 7 and subsequent drawings. In the following description, in order to improve description efficiency, the above-described embodiment will be referred to as "Embodiment 1", and differences from Embodiment 1 will be mainly described. Hereinafter, components that may be substantially the same as those in Embodiment 1 (or Embodiment 2 to be described later) are denoted by the same reference numerals, and description thereof may be omitted.

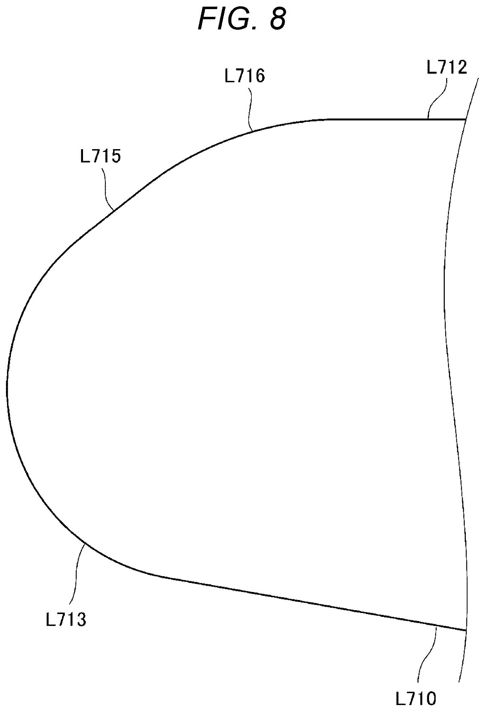

Fig. 7 is an enlarged view illustrating a radially inner portion of a portion related to one magnetic pole of a rotor core 32A according to Embodiment 2. Fig. 8 is an enlarged view illustrating a portion Q7 in Fig. 7.

The rotor core 32A according to Embodiment 2 is different from the rotor core 32 according to Embodiment 1 in that the first slit 71 is replaced with a first slit 71A. The first slit 71A is different from the first slit 71 according to Embodiment 1 in a shape viewed in the axial direction. In Embodiment 1, the first slit 71 has a shape of which the outline L712 on the radially outer side and outlines L713 on both sides in the circumferential direction (see Fig. 3) are directly connected when viewed in the axial direction. The outlines L713 on the both sides in the circumferential direction each have an arc shape protruding to the circumferential outer side (to a side away from the d-axis in the circumferential direction). On the other hand, the first slit 71A according to Embodiment 2 has a shape of which the outline L712 on the radially outer side and the outlines L713 on the both sides in the circumferential direction are connected via a linear outline L715 when viewed in the axial direction. The linear outline L715 is inclined toward the radially outer side as coming close to the d-axis in the circumferential direction. In this case, the outline L712 on the radially outer side and the linear outline L715 may be connected via an outline L716 related to a corner R. In this case, the outline L716 related to the corner R has the center of curvature inside the first slit 71A similarly to the outlines L713 on the both sides in the circumferential direction. A radius of the outline L716 related to the corner R may be significantly larger than a radius of the outlines L713 on the both sides in the circumferential direction.

Although an analysis result related to Embodiment 2 is not illustrated in the contour view here, the stress reduction effect around the first slit 71A can be confirmed as compared with the first comparative example to the third comparative example in a similar manner to Embodiment 1 described above. Specifically, the result was better than that in Embodiment 1 described above, and a stress at the position corresponding to the stress σ5 was reduced by about 8%, and stresses at other positions were equal to or less than those in Embodiment 1.

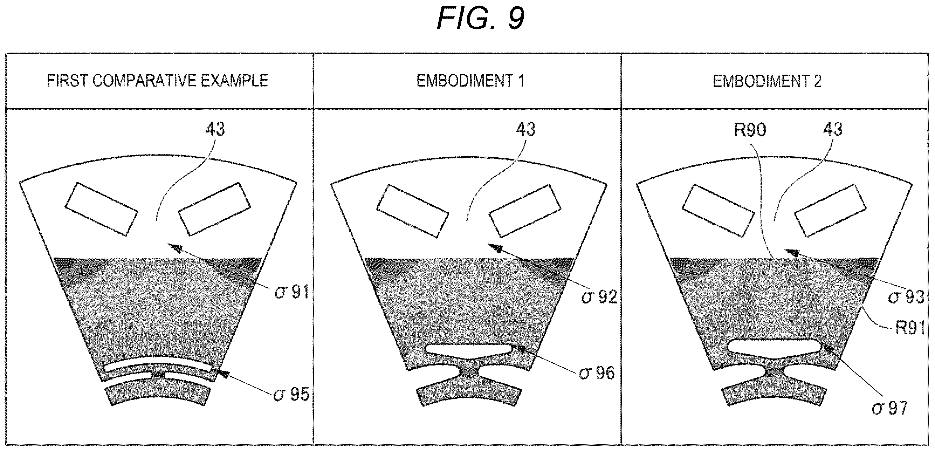

Fig. 9 is a view illustrating another effect of Embodiment 2, and is a table illustrating the analysis result. Fig. 9 relates to a comparison with the first comparative example and Embodiment 1. The analysis result is illustrated in a contour view as in Fig. 5. The analysis was performed using a finite element model under a condition that the centrifugal force generated when the motor 1 was rotated was applied. In the specification, the contour view is in gray scale because color display cannot be performed, and the description will be given on the premise that a distribution range of the same gradation is a region of the same numerical value range. In Fig. 9, a contour view around the magnet hole 321 is omitted in white for convenience.

As can be seen from Fig. 9, Embodiment 2 has the following features different from the first comparative example and Embodiment 1. That is, in a region of the second portion 3212 from both sides in the circumferential direction of the first slit 71A toward the center bridge 43, a region in which stresses are substantially equal (indicated by R90) is continuous. The stress in the region indicated by R90 is larger than a stress in a region indicated by R91. This means that the stress is dispersed, and a relationship of the stresses in the center bridge 43 is actually as follows. As a result of σ91 ≈ σ92 < σ93, stresses σ97 on the both sides in the circumferential direction of the first slit 71A were significantly reduced as compared with stresses σ95 at the same positions according to the first comparative example and stresses σ96 at the same positions according to Embodiment 1. Specifically, σ95 ≈ σ96 > σ97, and a reduction effect of 17% was confirmed based on σ97/σ95 = 0.83.

Hereinafter, such a shape feature in Embodiment 2 is also referred to as a "shape with the corner R on the radially inner side of the slit".

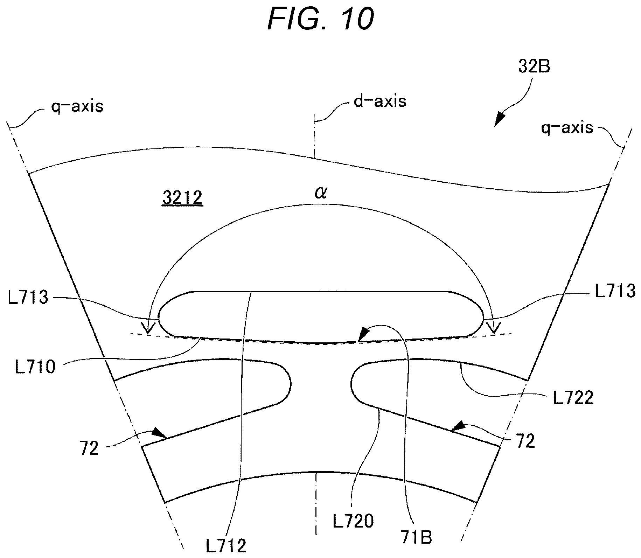

Fig. 10 is an enlarged view illustrating a radially inner portion of a portion related to one magnetic pole of a rotor core 32B according to Embodiment 3.

The rotor core 32B according to Embodiment 3 is different from the rotor core 32 according to Embodiment 1 in that the first slit 71 is replaced with a first slit 71B. The first slit 71B is different from the first slit 71 according to Embodiment 1 in a shape viewed in the axial direction. Specifically, the first slit 71B is different from the first slit 71 in a shape of the outline L710 on the radially inner side in addition to a point of the shape with the corner R on the radially inner side of the slit according to Embodiment 2 described above. The outline L710 on the radially inner side according to Embodiment 3 is the same as the outline L710 on the radially inner side according to Embodiment 1 in that the outline L710 on the radially inner side has a shape protruding to the radially inner side when viewed in the axial direction, but an angle α of the protruding shape is different. That is, the angle α in Embodiment 3 is closer to 180 degrees than that in Embodiment 1. Accordingly, the angle α of the protruding shape is freely set to some extent, and is preferably within a range of 150 degrees to 179 degrees, and more preferably within a range of 160 degrees to 175 degrees.

Although an analysis result related to Embodiment 3 is not illustrated in the contour view here, the stress reduction effect around the first slit 71B can be confirmed as compared with the first comparative example to the third comparative example in a similar manner to Embodiment 1 described above.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

Regarding the above embodiments, the following appendixes are further disclosed.

### Appendix 1

A rotor for a rotary electric machine, including:
a rotor core having an annular shape when viewed in an axial direction;
a rotor shaft disposed on a radially inner side of the rotor core and coupled to the rotor core by an interference in a radial direction; and
a magnet disposed in the rotor core for each magnetic pole in a form in which a plurality of magnetic poles are formed along a circumferential direction, in which
the rotor core has a plurality of holes in the axial direction that are radially inward than the magnet,
the plurality of holes in the axial direction include a plurality of first holes regularly arranged in the circumferential direction at first radial positions and a plurality of second holes regularly arranged in the circumferential direction at second radial positions that are radially inward than the first radial positions, and
the first hole has a protruding shape of which an outline on the radially inner side protrudes to the radially inner side when viewed in the axial direction.

### Appendix 2

The rotor for a rotary electric machine according to Appendix 1, in which
the first hole has a linear shape of which an outline on a radially outer side is orthogonal to the radial direction when viewed in the axial direction.

### Appendix 3

The rotor for a rotary electric machine according to Appendix 1 or 2, in which
the first hole has a shape of which an outline on each of both sides in the circumferential direction and the outline on the radially outer side are connected to each other via a linear outline when viewed in the axial direction.

### Appendix 4

The rotor for a rotary electric machine according to Appendix 3, in which
the first hole has a shape of which the outline on each of the both sides in the circumferential direction and the outline on the radially outer side are connected to the linear outline via a corner R when viewed in the axial direction.

### Appendix 5

The rotor for a rotary electric machine according to any one of Appendices 2 to 4, in which
the rotor core has magnet holes arranged with a range through which a line, parallel to the radial direction passes serving as a bridge or an inter-magnetic pole region when viewed in the axial direction, the line passing through a center in the circumferential direction of the first hole.

### Appendix 6

The rotor for a rotary electric machine according to any one of Appendices 2 to 5, in which
the first hole has a shape symmetrical with respect to the line parallel to the radial direction when viewed in the axial direction, the line passing through the center in the circumferential direction of the first hole.

### Appendix 7

The rotor for a rotary electric machine according to any one of Appendices 1 to 6, in which
the second hole is disposed radially inward than a reference circle which is concentric with the annular shape when viewed in the axial direction, and
the first hole has a distal end portion having the protruding shape positioned radially outward than the reference circle.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotor (30) for a rotary electric machine, comprising:
a rotor core (32) having an annular shape when viewed in an axial direction;
a rotor shaft (34) disposed on a radially inner side of the rotor core and coupled to the rotor core by an interference in a radial direction; and
a magnet (61) disposed in the rotor core for each magnetic pole in a form in which a plurality of magnetic poles are formed along a circumferential direction, wherein
the rotor core has a plurality of holes in the axial direction that are radially inward than the magnet,
the plurality of holes in the axial direction include a plurality of first holes (71) regularly arranged in the circumferential direction at first radial positions and a plurality of second holes (72) regularly arranged in the circumferential direction at second radial positions that are radially inward than the first radial positions,
the first hole has a protruding shape of which an outline (L710) on the radially inner side protrudes to the radially inner side when viewed in the axial direction, and has a shape of which a center line (d-axis), parallel to the radial direction and passing through a center in the circumferential direction of the first hole, passes between a portion in the circumferential direction of the adjacent second holes, and
the outline on the radially inner side includes two straight lines (L710), and a curve (C712) that passes through a radially outer side of an intersection point where extension lines of the two straight lines intersect and that connects the two straight lines.

2. The rotor for a rotary electric machine according to claim 1, wherein
the first hole has a linear shape of which an outline on a radially outer side is orthogonal to the radial direction when viewed in the axial direction.

3. The rotor for a rotary electric machine according to claim 1 or 2, wherein
the first hole has a shape of which an outline on each of both sides in the circumferential direction and the outline on the radially outer side are connected to each other via a linear outline when viewed in the axial direction.

4. The rotor for a rotary electric machine according to any one of claims 1 to 3, wherein
the first hole has a shape of which the outline on each of the both sides in the circumferential direction and the outline on the radially outer side are connected to the linear outline via a corner R when viewed in the axial direction.

5. The rotor for a rotary electric machine according to any one of claims 1 to 4, wherein
the first hole has an angle (α) which is formed by the two straight lines related to the protruding shape falling within a range of 150 degrees to 179 degrees when viewed in the axial direction.

6. The rotor for a rotary electric machine according to any one of claims 1 to 5, wherein
the first hole has an angle (α) which is formed by the two straight lines related to the protruding shape falling within a range of 160 degrees to 175 degrees when viewed in the axial direction.

7. The rotor for a rotary electric machine according to any one of claims 1 to 6, wherein
the rotor core has magnet holes (321) with a range through which the center line of the first hole passes serving as a bridge or an inter-magnetic pole region when viewed in the axial direction.

8. The rotor for a rotary electric machine according to any one of claims 1 to 7, wherein
the first hole has a shape symmetrical with respect to the center line of the first hole when viewed in the axial direction.

9. The rotor for a rotary electric machine according to any one of claims 1 to 8, wherein
the second hole is disposed radially inward than a reference circle (L3) which is concentric with the annular shape when viewed in the axial direction, and
the first hole has a distal end portion having the protruding shape positioned radially outward than the reference circle.
